# EUROPEAN PATENT APPLICATION

(11) **EP 2 100 535 A1**
(43) Date of publication of application: **16.09.2009**
(21) Application number: 08004393.8
(22) Date of filing: 10.03.2008
(51) Int. Cl.: A47B 47/04, A47B 96/20, F16B 12/12

(54) **Bamboo frame structure**

(71) Applicant: Wang, Wen-Tsan, Taipei City (TW)
(72) Inventor: Wang, Wen-Tsan, Taipei City (TW)
(74) Representative: Ruschke, Hans Edvard

(57) **Abstract**

A bamboo frame structure formed of female bamboo frame bars (A) and male bamboo frame bars (B) and reinforced with reinforcing bamboo strips is disclosed. Each female bamboo frame bar is formed of two parallel bamboo strips (11) and a plurality of transverse bamboo blocks (2) set in between the two parallel bamboo strips (11) and kept apart from one another at a distance and kept spaced from the two distal ends each bamboo strip at a distance. Each male bamboo frame is formed of two parallel bamboo strips (11) and a plurality of longitudinal bamboo blocks (2A) set in between the two bamboo strips and respectively protruding over the two distal ends of each bamboo strip in such a manner that the protruding part of each bamboo block at one end of each male bamboo frame bar is tightly insertable into the gap in between the two bamboo strips of each female bamboo frame bar and connectable thereto with a fastening member.

## Description

### BACKGROUND OF THE INVENTION

### 1. Field of the Invention:

The present invention relates to bamboo materials and more particularly, to a bamboo frame structure for making bamboo cabinets, bamboo racks, bamboo storage boxes and bamboo furniture.

### 2. Description of the Related Art:

Various materials including ceramics, glass, wood, plastics, stainless steel, and etc. may be used for making storage containers for keeping things. Recently, bamboo materials are intensively used for making furniture for the advantage of causing a sense of antique beauty. A bamboo furniture has frame bars (posts and beams) prepared from bamboo. A bamboo frame bar may be prepared subject to one of the following two ways:
The first way is to cut well-dried bamboo canes into small bamboo strips, and then to bond a number of bamboo strips into a bamboo plate by means of a compression bonding process, and then cut the bamboo plate into the desired shape.
The second way is to crush bamboo canes into chips and then to mix the bamboo chips with an adhesive, and then to mold the mixture into a bamboo plate through a thermal compression molding process, and then to cut the bamboo plate into the desired shape.
According to the aforesaid prior art processing processes, the prepared bamboo frame bars may have to be covered with a wood grain covering. The cost of the aforesaid prior art processing processes is high. Further, the aforesaid prior art processing processes consume much energy. The use of the adhesive may cause environmental pollution.

### SUMMARY OF THE INVENTION

The present invention has been accomplished under the circumstances in view. According to one aspect of the present invention, well-dried bamboo canes are longitudinally cut into bamboo strips, and a part of the bamboo strips are cut into transverse and longitudinal bamboo blocks. The bamboo strips and the bamboo blocks may be bonded together to form female bamboo frame bars and female bamboo frame bars for making bamboo cabinets, bamboo racks, bamboo storage boxes and bamboo furniture.

A female bamboo frame bar can be formed of two bamboo strips and a number of transverse bamboo blocks. The bamboo strips are arranged in parallel, and the transverse bamboo blocks are set in between the two bamboo strips and kept part and spaced from the two distal ends of each bamboo strip at a distance so that a gap is defined in each end of the female bamboo frame bar between the two bamboo strips. A male bamboo frame bar can be formed of two bamboo strips and a number of longitudinal bamboo blocks. The bamboo strips are arranged in parallel, and the longitudinal bamboo blocks are set in between the two bamboo strips at the two distal ends and partially protruding over each end of the male bamboo frame bar. By means of inserting the protruding part of the longitudinal bamboo block of one male bamboo frame bar into the gap in one end of one female bamboo frame bar, one female bamboo frame bar and one male bamboo frame bar are connected at right angles to form an angle frame. Further, bamboo strips may be obliquely connected between the male bamboo frame bar and the female bamboo frame bar to reinforce the structural strength of the angle frame.

Further, a female bamboo frame bar can be formed of three or more bamboo strips with transverse bamboo blocks respectively set in between each two adjacent bamboo strips to keep the bamboo strips apart and in a parallel manner. A male bamboo frame bar can also be formed of three or more bamboo strips with longitudinal bamboo blocks respectively set in between each two adjacent bamboo strips at the two distal ends.

Further, one male bamboo frame bar and one female bamboo frame bar may be connected in a line, thereby forming a post.

Further, bamboo strips and bamboo blocks may be directly bonded together, forming a solid bamboo frame bar for use as a leg member for a bamboo furniture.

### BRIEF DESCRIPTION OF THE DRAWINGS

FIG. 1 is a schematic drawing showing a well-dried bamboo cane cut in longitudinal direction according to the present invention.
FIG. 2 illustrates two bamboo strips cut from a bamboo cane according to the present invention.
FIG. 3 is an exploded view of a part of bamboo frame structure formed of female bamboo frame bars and male bamboo frame bars in accordance with a first embodiment of the present invention.
FIG. 4 is an exploded view of a bamboo post formed of one female bamboo frame bar and one male bamboo frame bar in accordance with a first embodiment of the present invention.
FIG. 5 is an exploded view of a part of bamboo frame structure formed of female bamboo frame bars and male bamboo frame bars in accordance with a second embodiment of the present invention.
FIG. 6 is an oblique elevation of a bamboo rack formed of female bamboo frame bars and male bamboo frame bars in accordance with the second embodiment of the present invention.
FIG. 7 is a schematic drawing showing a bamboo grating panel supported on two supports and each support formed of one female bamboo frame bar and one male bamboo frame bar in accordance with the second embodiment of the present invention.
FIG. 8 is a plain view of a rectangular open frame formed of female bamboo frame bars and male bamboo frame bars and reinforced with bamboo strips according to the present invention.
FIG. 9 is a schematic plain view showing an E-shaped frame formed of three male bamboo frame bars and one female bamboo frame bar and reinforced with reinforcing bamboo strips according to the present invention.
FIG. 10 is a schematic plain view showing an angle frame structure formed of two male bamboo frame bars and two female bamboo frame bars with bamboo blocks set between the two male bamboo frame bars and the two female bamboo frame bars according to the present invention.
FIG. 11 is a schematic plain view showing an angle frame structure formed of a male bamboo frame bar and a female bamboo frame bar with a reinforcing member obliquely connected between the female bamboo frame bar and the male bamboo frame bar according to the present invention.

### DETAILED DESCRIPTION OF THE PREFERRED EMBODIMENT

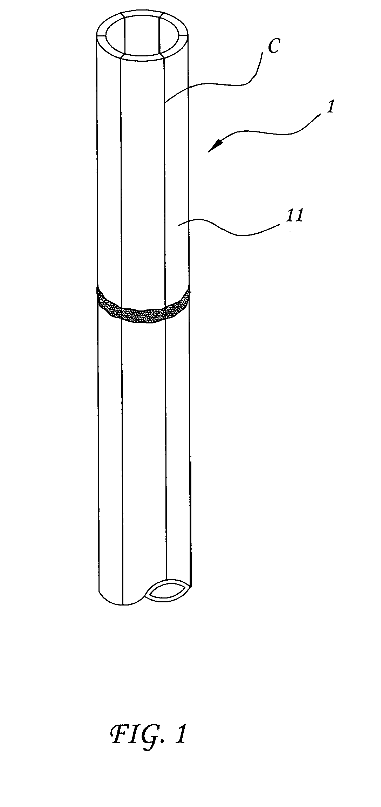

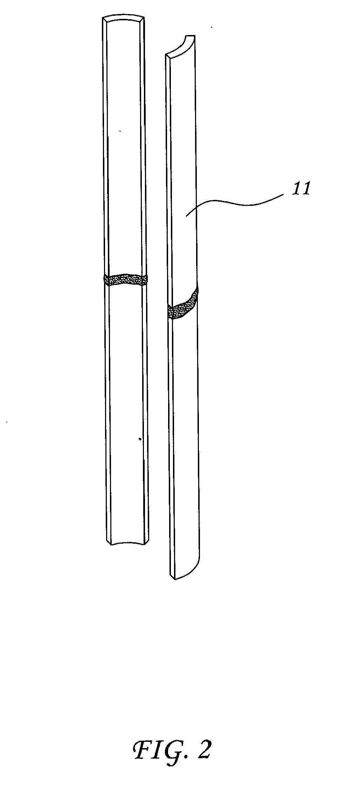

Referring to FIGS. 1 and 2, a well-dried bamboo cane 1 is trimmed and then cut along the length **C** into bamboo strips **11.**

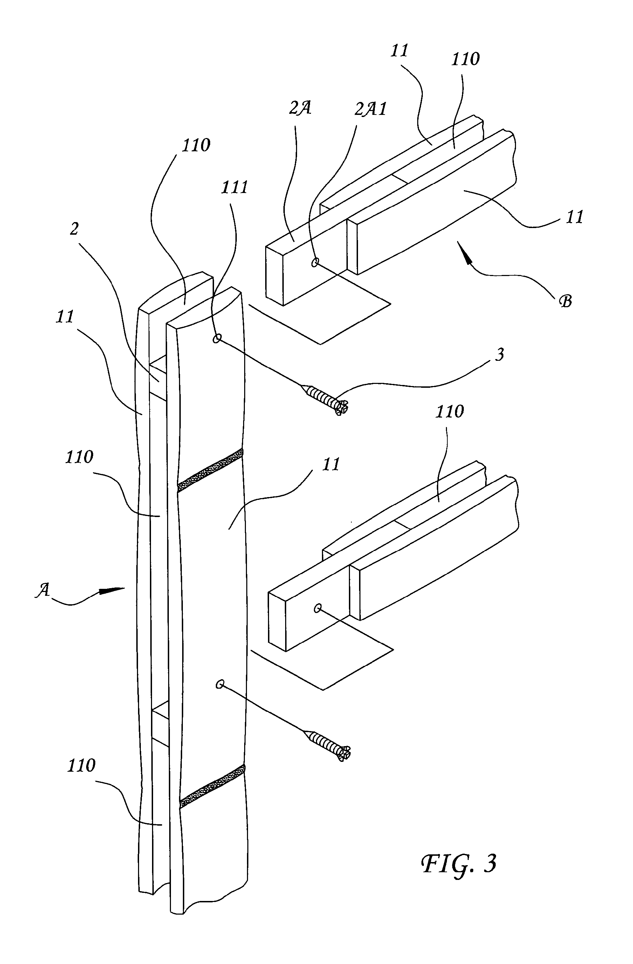

Referring to FIG. 3, each two bamboo strips **11** are connected in parallel with transverse bamboo blocks **2** set therebetween to form a respective female bamboo frame bar **A.** Alternatively, each two bamboo strips **11** can be connected in parallel with a longitudinal bamboo block **2A** set therebetween at each of the two opposite ends to form a respective male bamboo frame bar **B.** The transverse bamboo blocks **2** and the longitudinal bamboo block **2A** are respectively fastened to the respective bamboo strips **11** by means of an adhesive, pins, screws, or any of a variety of conventional bonding techniques. The transverse bamboo blocks **2** or longitudinal bamboo blocks **2A** define a gap **110** between the two bamboo strips **11.** The transverse bamboo blocks **2** are kept spaced from the ends of the female bamboo frame bar **A** at a distance. The longitudinal bamboo block **2A** protrudes over the associating end of the associating male bamboo frame bar **B** for insertion into the gap **110** in between the two bamboo strips **1** of one female bamboo frame bar **A.** Mounting through holes **111** and **2A1** are transversely cut through the bamboo strips **11** of each female bamboo frame bar **A** and the longitudinal blocks **2A** of each male bamboo frame bar **B.** When the protruding part of the longitudinal block **2A** at one end of one male bamboo frame bar **B** is inserted into the gap **110** between the two longitudinal strips **11** of one female bamboo frame bar **A,** a fastening member, for example, screw **3** is fastened to the corresponding mounting through hole **111** at the female bamboo frame bar **A** and the mounting through hole **2A1** at the longitudinal block **2A** to affix the female bamboo frame bar **A** and the male bamboo frame bar **B** at right angles. According to this embodiment, each female bamboo frame bar **A** is used as a post, and each male bamboo frame bar **B** is used as a beam.

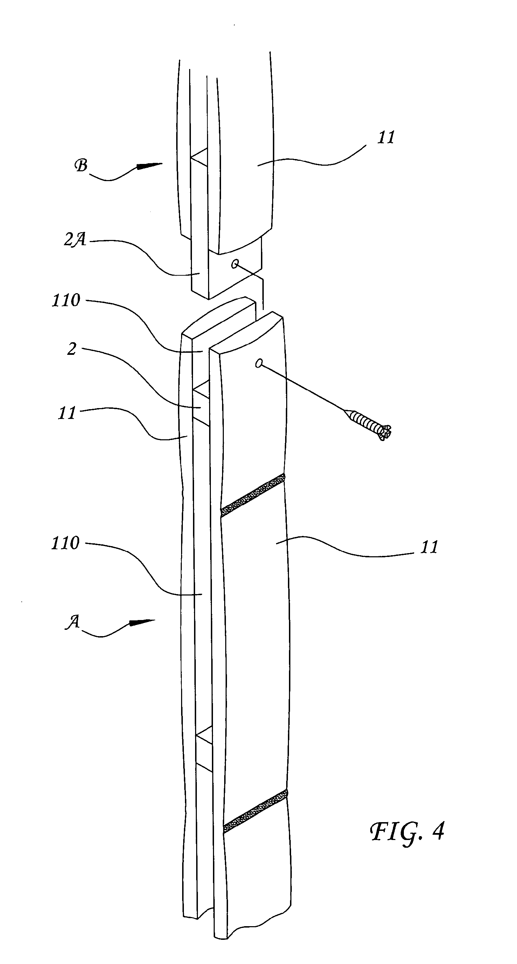

Referring to FIG. 4, one female bamboo frame bar **A** and one male bamboo frame bar **B** can be connected in line to form a bamboo post by means of inserting the protruding part of the protruding part of the longitudinal block **2A** at one end of the male bamboo frame bar **B** into the gap **110** between the two longitudinal strips **11** of the female bamboo frame bar **A** and fixedly connected thereto with a fastening member, for example, screw.

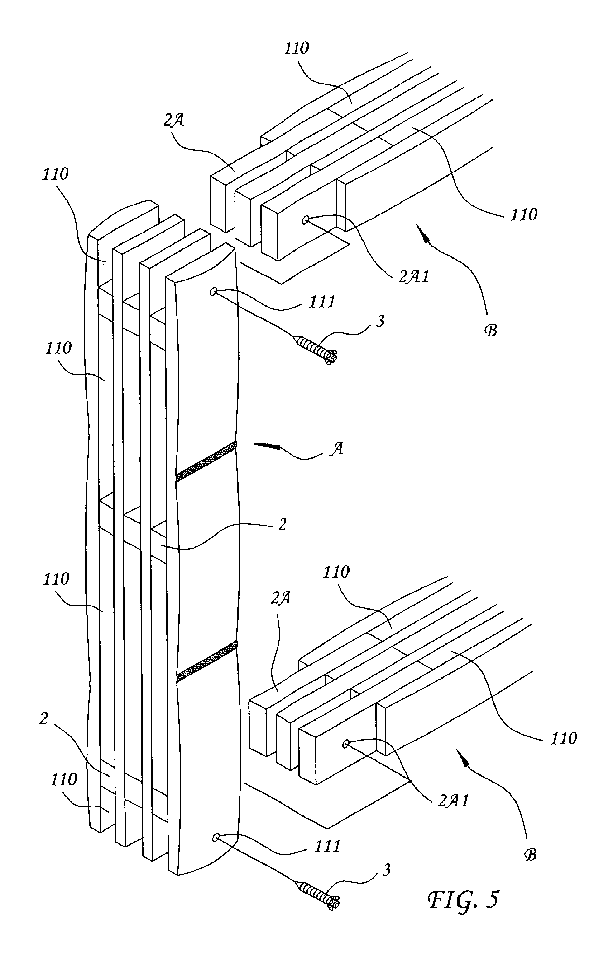

FIG. 5 is an exploded view of an alternate form of the present invention. According to this embodiment, each female bamboo frame bar **A** is comprised of a plurality of bamboo strips **11** arranged in parallel, and a plurality of transverse bamboo blocks **2** respectively set between each two adjacent bamboo strips **11;** each male bamboo frame bar **B** is comprised of a plurality of bamboo strips **11** arranged in parallel, and a plurality of longitudinal bamboo blocks **2A** respectively set between each two adjacent bamboo strips **11** at each of the two distal ends and respectively protruding over the associating end of the male bamboo frame bar **B.** Same as the embodiment shown in FIG. 3, mounting through holes **111** and **2A1** are transversely cut through the bamboo strips **11** of each female bamboo frame bar **A** and the longitudinal blocks **2A** of each male bamboo frame bar **B.** When the longitudinal blocks **2A** at one end of one male bamboo frame bar **B** are respectively inserted into the gaps **110** between each two adjacent longitudinal strips **11** of one female bamboo frame bar **A,** a fastening member, for example, screw **3** is fastened to the corresponding mounting through holes **111** at the female bamboo frame bar **A** and the mounting through holes **2A1** at the longitudinal block **2A** to affix the female bamboo frame bar **A** and the male bamboo frame bar **B** at right angles.

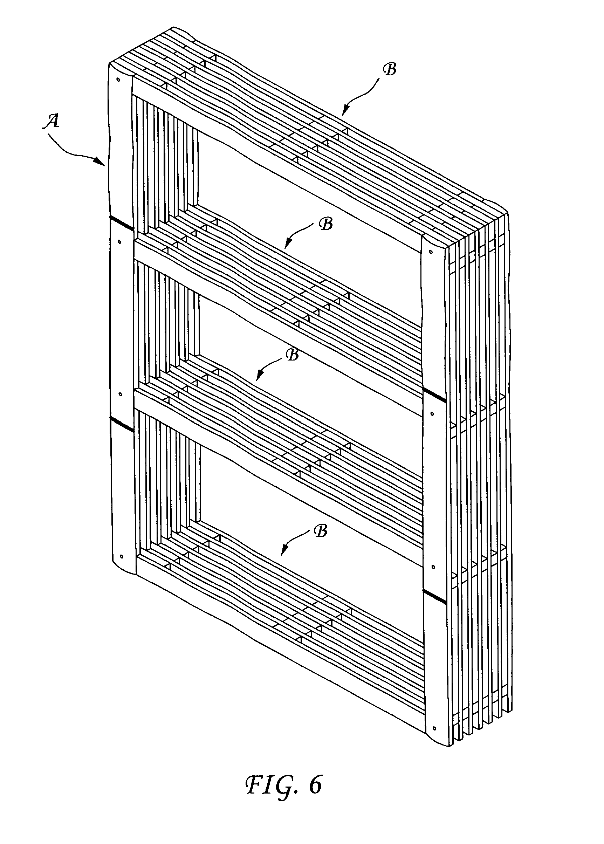

Referring to FIG. 6 and FIG. 5 again, multiple female bamboo frame bars **A** and multiple male bamboo frame bars **B** can be fastened together to constitute a rack.

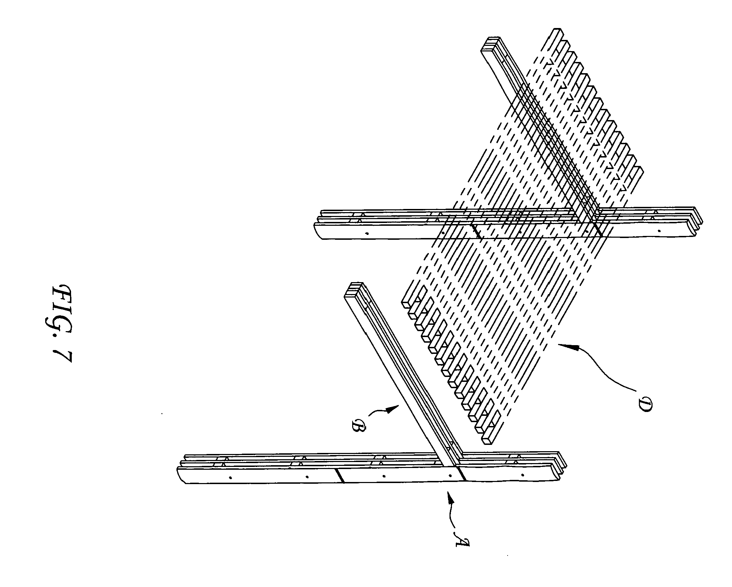

Referring to FIG. 7 and FIG. 5 again, one female bamboo frame bar **A** and one male bamboo frame bar **B** can be fastened together to constitute a support so that two supports can be used and affixed to a wall to support a bamboo grating panel **D** for holding storage or display items.

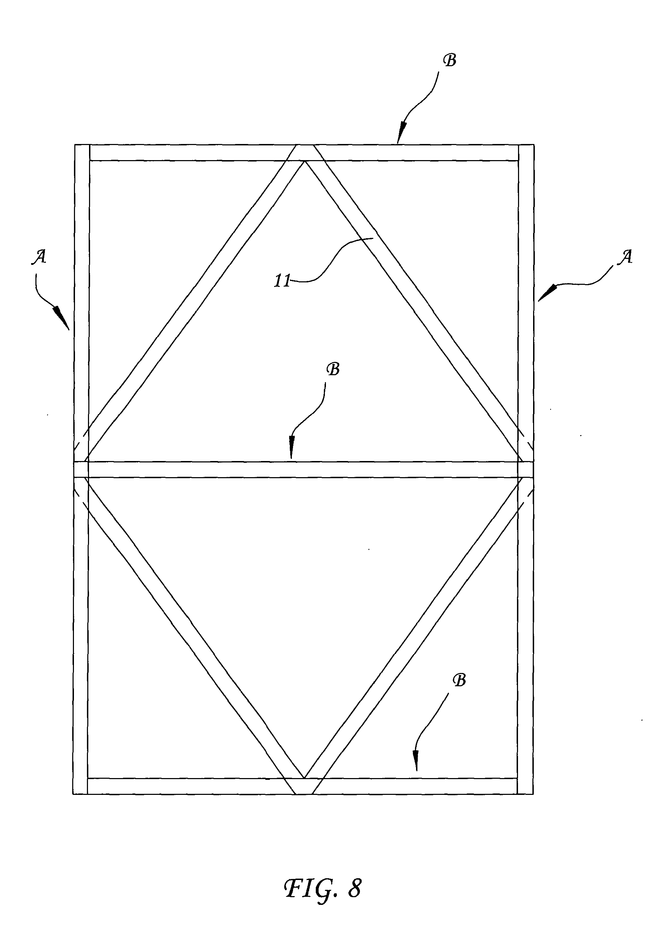

Referring to FIG. 8, female bamboo frame bars **A** and male bamboo frame bars **B** can be fastened together to constitute a rectangular open frame and a bamboo strip **11** may be obliquely connected between one female bamboo frame bar **A** and one male bamboo frame bar **B** to work as a brace.

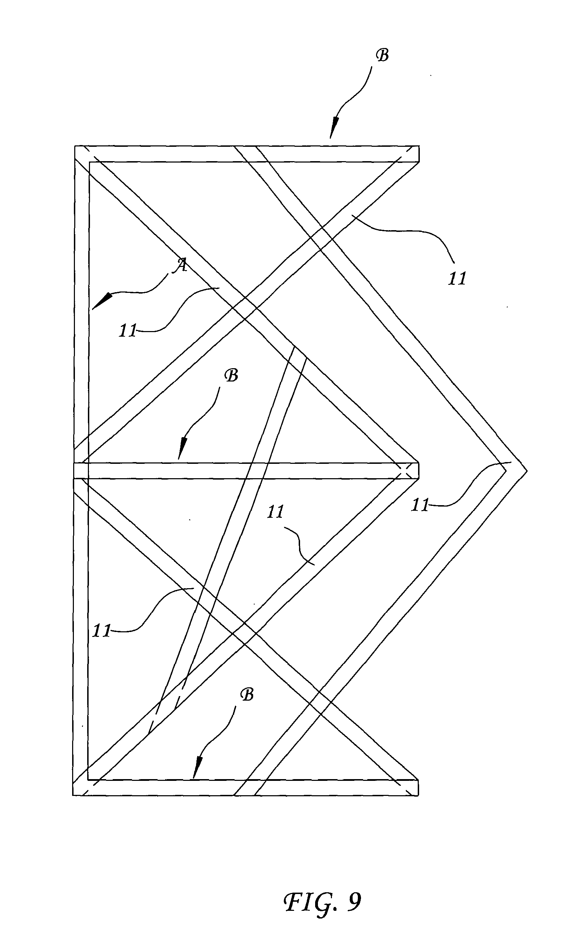

Referring to FIG. 9, three male bamboo frame bars **B** are respectively connected to one female bamboo frame bar **A** to constitute an E-shaped frame, and reinforcing bamboo strips **11** are fastened to the female bamboo frame bar **A** and the male bamboo frame bars **B** to reinforce the structural strength of the E-shaped frame.

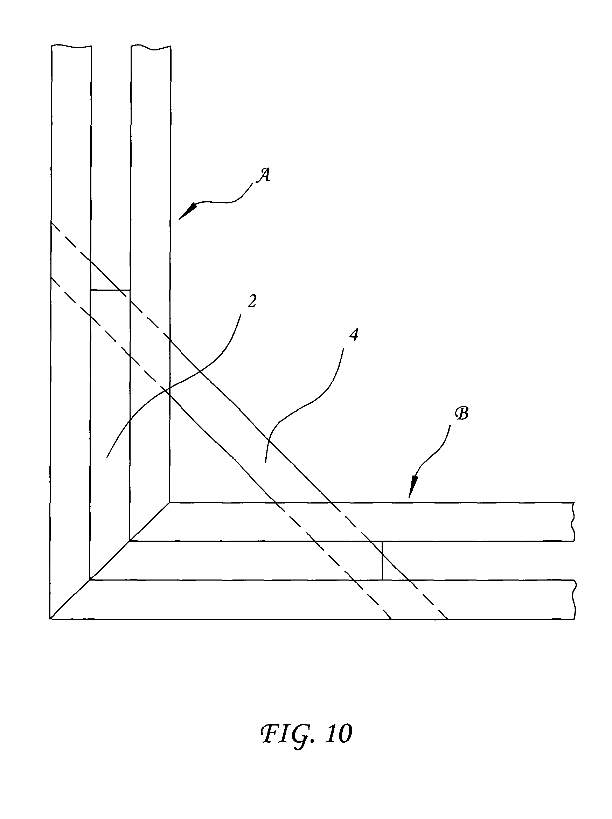

Referring to FIG. 10, two male bamboo frame bars **B** are respectively perpendicularly connected to two female bamboo frame bars **A** with bamboo blocks **2** set between the two male bamboo frame bars **B** and the two female bamboo frame bars **A,** forming an angle frame structure.

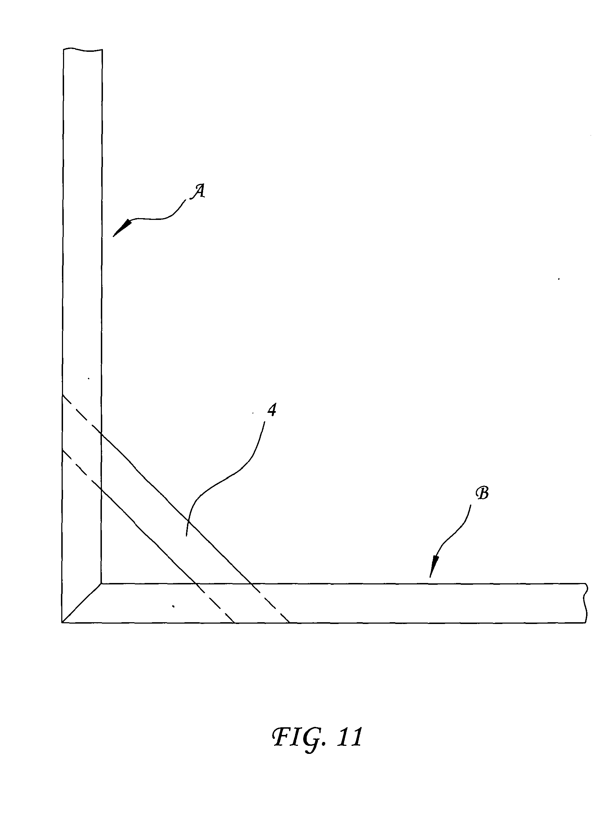

Referring to FIG. 11, a male bamboo frame bar **B** and a female bamboo frame bar **A** are fastened together to form an angle frame structure, and a reinforcing member **4** is obliquely connected between the female bamboo frame bar **A** and the male bamboo frame bar **B** to reinforce the strength of the angle frame structure.

Further, well-dried bamboo canes **1** can be trimmed and then cut along the length into bamboo strips **11,** and then a number of bamboo strips **11** can be bonded to one another to form a solid high-strength frame bar for use as a leg member for furniture.

In conclusion, female bamboo frame bars and male bamboo frame bars made according to the present invention can be used for making storage cabinets, racks, drawers, storage boxes, furniture, and etc.

Although particular embodiment of the inventions have been described in detail for purposes of illustration, various modifications and enhancements may be made without departing from the spirit and scope of the invention. Accordingly, the invention is not to be limited except as by the appended claims.

## Claims

1. A bamboo frame structure comprising at least one female bamboo frame bar, at least one male bamboo frame bar connected to said at least one female bamboo frame bar, and a plurality of reinforcing bamboo strips obliquely connected to said at least one female bamboo frame bar and said at least one male bamboo frame bar, each said female bamboo frame bar comprising a plurality of bamboo strips arranged in parallel and a plurality of transverse bamboo blocks set in between the bamboo strips and defining a gap in between each two adjacent bamboo strips and kept spaced from two distal ends of each bamboo strip at a distance, each said male bamboo frame comprising a plurality of bamboo strips arranged in parallel and two longitudinal bamboo blocks set in between the bamboo strips and respectively protruding over two distal ends of each bamboo strip in such a manner that the protruding part of each bamboo block at one end of each said male bamboo frame bar is insertable into the gap in between two bamboo strips of each said female bamboo frame bar and connectable thereto with fastening means.

2. The bamboo frame structure as claimed in claim 1, wherein one said female bamboo frame bar and one said male bamboo frame bar are connected at right angles to form an angle frame and a reinforcing member is obliquely connected between the female bamboo frame bar and the male bamboo frame bar of the angle frame.

3. The bamboo frame structure as claimed in claim 1, further comprising at least one solid bamboo frame bar, each said solid bamboo frame bar being comprised of a plurality of bamboo strips bonded together.

4. The bamboo frame structure as claimed in claim 1, wherein a number of said female bamboo frame bars and a number of said male bamboo frame bars are connected to one another to form a rectangular bamboo open frame, and a number of said reinforcing bamboo strips are mounted in said rectangular bamboo open frame and obliquely connected between the female bamboo frame bars and the male bamboo frame bars.

5. The bamboo frame structure as claimed in claim 1, wherein a number of said male bamboo frame bars are perpendicularly connected to one said female bamboo frame bar to form an E-shaped bamboo frame, and a number of said reinforcing bamboo strips are mounted in the E-shaped bamboo frame and obliquely connected to the male bamboo frame bars and the female bamboo frame bar to reinforce the strength of the E-shaped bamboo frame.

6. The bamboo frame structure as claimed in claim 1, wherein two said female bamboo frame bars are arranged in parallel and connected with two said male bamboo frame bars to form an angle frame, and a number of said reinforcing bamboo strips are obliquely connected between the female bamboo frame bars and male bamboo frame bars of the angle frame.

7. The bamboo frame structure as claimed in claim 1, wherein one said female bamboo frame bar and one said male bamboo frame bar are connected in a line to form a bamboo post.

## Amended claims

### Amended claims in accordance with Rule 137(2) EPC.

**1.** A method of forming a bamboo frame structure comprising at least one female bamboo frame bar (A), at least one male bamboo frame bar (B) connected to said at least one female bamboo frame bar (A), and a plurality of reinforcing bamboo strips (11, 4) obliquely connected to said at least one female bamboo frame bar (A) and said at least one male bamboo frame bar (B), the method comprising:
making each said female bamboo frame bar (A) by taking a plurality of bamboo strips (11), arranging the bamboo strips (11) in parallel, and setting a plurality of transverse bamboo blocks (2) in between the bamboo strips (11) to define a gap in between each two adjacent bamboo strips (11) while keeping the blocks (2) spaced a distance from two distal ends of each bamboo strip (11);
making each said male bamboo frame bar (B) by taking a plurality of bamboo strips (11) arranging the bamboo strips (11) in parallel and setting two longitudinal bamboo blocks (2A) in between the bamboo strips (11) respectively protruding beyond two distal ends of each bamboo strip (11) in such a manner that the protruding part of each bamboo block (2A) at one end of each said male bamboo frame bar (B) is insertable into the gap (110) in between two bamboo strips (11) of each said female bamboo frame bar (A); and
assembling the frame structure by connecting the at least one female bamboo frame bar (A) to the at least one male bamboo frame bar (B) by inserting the protruding part of each bamboo block (2A) at the end of each said male bamboo frame bar (B) into the gap (110) between the bamboo strip (11) of each said female bamboo frame bar (A), and fastening the female and male bars (A,B) together with fastening means (3).

**2.** The method as claimed in claim 1, wherein one said female bamboo frame bar (A) and one said male bamboo frame (B) bar are connected at right angles to form an angle frame and a reinforcing member (11) is obliquely connected between the female bamboo frame bar and the male bamboo frame bar of the angle frame.

**3.** The method as claimed in claim 1, wherein the bamboo frame structure further comprises at least one solid bamboo frame bar, each said solid bamboo frame bar being comprised of a plurality of bamboo strips bonded together.

**4.** The method as claimed in claim 1, wherein a number of said female bamboo frame bars (A) and a number of said male bamboo frame bars (B) are connected to one another to form a rectangular bamboo open frame, and a number of said reinforcing bamboo strips (4, 11) are mounted in said rectangular bamboo open frame and obliquely connected between the female bamboo frame bars (A) and the male bamboo frame bars (B).

**5.** The method as claimed in claim 1, wherein a number of said male bamboo frame bars (B) are perpendicularly connected to one said female bamboo frame bar (A) to form an E-shaped bamboo frame, and a number of said reinforcing bamboo strips (11) are mounted in the E-shaped bamboo frame and obliquely connected to the male bamboo frame bars (B) and the female bamboo frame bar (A) to reinforce the strength of the E-shaped bamboo frame.

**6.** The method as claimed in claim 1, wherein two said female bamboo frame bars (A) are arranged in parallel and connected with two said male bamboo frame bars (B) to form an angle frame, and a number of said reinforcing bamboo strips (4, 11) are obliquely connected between the female bamboo frame bars (A) and male bamboo frame bars (B) of the angle frame.

**7.** The method as claimed in claim 1, wherein one said female bamboo frame bar (A) and one said male bamboo frame bar (B) are connected in a line to form a bamboo post.
